(19) 

**Europäisches Patentamt**
**European Patent Office**
**Office européen des brevets**

(11) **EP 4 644 437 A1**

(12) # EUROPEAN PATENT APPLICATION

(43) Date of publication:
**05.11.2025 Bulletin 2025/45**

(21) Application number: **24173395.5**

(22) Date of filing: **30.04.2024**

(51) International Patent Classification (IPC):
***C08F 210/06*** (2006.01)   ***C08L 23/14*** (2006.01)
***C08F 2/00*** (2006.01)

(52) Cooperative Patent Classification (CPC):
(C-Sets available)
C08L 2203/18; C08L 2205/02; C08L 2205/025;
C08L 2314/02                                (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Borealis GmbH**
**1020 Vienna (AT)**

(72) Inventors:
• **WANG, Jingbo**
  **4021 Linz (AT)**
• **GAHLEITNER, Markus**
  **4021 Linz (AT)**
• **LESKINEN, Pauli**
  **06101 Porvoo (FI)**
• **STUBENRAUCH, Kurt**
  **4021 Linz (AT)**

(74) Representative: **Maiwald GmbH**
**Elisenhof**
**Elisenstraße 3**
**80335 München (DE)**

(54)   **PIPE MATERIAL BASED ON C3C2C6 TERPOLYMER WITH SPECIFIC STRUCTURE**

(57)   The present invention relates to a polypropylene composition for pipes, characterized in that the polypropylene composition comprises a random propylene-ethylene-α-olefin terpolymer having a relative content of isolated to block ethylene sequences, 1(E), of more than 82.0%, a pipe comprising the polypropylene composition in an amount of more than 90.0 wt.-%, and the use of the polypropylene composition as a pipe.

EP 4 644 437 A1

(52) Cooperative Patent Classification (CPC): (Cont.)

C-Sets
**C08F 210/06, C08F 2/001;**
**C08F 210/06, C08F 210/02, C08F 210/14;**
**C08L 23/142, C08L 23/142;**
C08F 210/06, C08F 210/02, C08F 210/14,
C08F 2500/05, C08F 2500/12, C08F 2500/27,
C08F 2500/30, C08F 2500/31;
C08F 210/06, C08F 210/02, C08F 210/14,
C08F 2500/05, C08F 2500/12, C08F 2500/27,
C08F 2500/30, C08F 2500/31, C08F 2500/36;
C08F 210/06, C08F 210/02, C08F 210/14,
C08F 2500/05, C08F 2500/12, C08F 2500/27,
C08F 2500/30, C08F 2500/31, C08F 2500/36,
C08F 2500/35

## Description

The present invention relates to a polypropylene composition for pipes, characterized in that the polypropylene composition comprises a random propylene-ethylene-$\alpha$-olefin terpolymer having a relative content of isolated to block ethylene sequences, I(E), of more than 82.0%, a pipe comprising the polypropylene composition in an amount of more than 90.0 wt.-% and the use of the polypropylene composition as a pipe.

## Technical Background

Polypropylene (PP) materials are frequently used due to their good cost-to-performance ratio for various pipe applications, such as fluid transport during which the fluid is pressurized and/or heated.

In particular, polypropylene materials are used in applications for plumbing and heating, such as in-house hot and cold water pressure pipes and fittings, floor and wall heating systems and radiator connections.

However, in order to further improve the cost-to-performance ratio of PP pipes, there is still a need to improve the pipe material properties so that *inter alia* the wall thickness of the pipes can be reduced, thereby saving costs in material and reducing the related carbon footprint.

Accordingly, polypropylene material suitable for pipes with a reduced wall thickness needs to show an improved resistance against pressure in order to compensate for the thinner walls.

Propylene-based terpolymers are known as materials for pipes. EP 2914658 A1 describes the modification of a $C_3C_2C_6$ terpolymer with a copolymer of ethylene and 1-butene that leads to a high impact strength of the pipes. Accordingly, an additional component had to be added to the polyolefin compositions.

The present invention is based on the finding that a superior pressure resistance can be achieved in pipes comprising a polypropylene composition comprising a random propylene-ethylene-$\alpha$-olefin terpolymer having a relative content of isolated to block ethylene sequences, I(E), of more than 82.0% over pipes comprising a random propylene-ethylene-$\alpha$-olefin terpolymer having a relative content of isolated to block ethylene sequences, I(E), of less than 82.0%.

## Definitions

Unless defined otherwise, all technical and scientific terms used herein have the same meaning as commonly understood by one of ordinary skill in the art to which the invention pertains. Although, any methods and materials similar or equivalent to those described herein can be used in practice for testing of the present invention, the preferred materials and methods are described herein. In describing and aspecting the present invention, the following terminology will be used in accordance with the definitions set out below.

For the purposes of the present invention, the term "consisting of" is considered to be a preferred embodiment of the term "comprising of". If hereinafter a group is defined to comprise at least a certain number of elements, this is also to be understood to disclose a group, which preferably consists only of these elements.

Where an indefinite or definite article is used when referring to a singular noun, e.g. "a", "an" or "the", this includes a plural of that noun unless something else is specifically stated.

A random propylene-ethylene-$\alpha$-olefin terpolymer according to the present invention is a copolymer of propylene monomer units, ethylene comonomer units and $\alpha$-olefin comonomer units, in which the ethylene and $\alpha$-olefin comonomer units are distributed randomly over the polymeric chain. The term "terpolymer" defines that only units derived from one kind of $\alpha$-olefin comonomer is present in the polymer besides units derived from propylene and ethylene.

A polypropylene composition in the present disclosure is a composition in which the polymeric components have a combined amount of units derived from propylene of at least 50 wt.-%, based on the total weight of the polymeric components.

Usually, a propylene polymer comprising at least two propylene polymer fractions (components), which have been produced under different polymerization conditions resulting in different (weight average) molecular weights and/or different comonomer contents for the fractions, preferably produced by polymerizing in multiple polymerization stages with different polymerization conditions, is referred to as "multimodal". The prefix "multi" relates to the number of different polymer fractions the propylene polymer is consisting of. As an example of multimodal propylene polymer, a propylene polymer consisting of two fractions only is called "bimodal", whereas a propylene polymer consisting of three fractions only is called "trimodal". A unimodal propylene polymer only consists of one fraction. Thereby, the term "different" means that the propylene polymer fractions differ from each other in at least one property, preferably in the weight average molecular weight - which can also be measured in different melt flow rates of the fractions - or comonomer content or both.

The regio-defects of propylene polymers can be of three different types, namely 2,1-erythro (2,1e), 2,1-threo (2,1t) and 3,1 defects. A detailed description of the structure and mechanism of formation of regio-defects in polypropylene can be found in Chemical Reviews 2000, 100(4), pages 1316 to 1327. These defects are measured using $^{13}$C NMR as described in more detail below.

The term "2,1 regio-defects" as used in the present invention defines the sum of 2,1 erythro regio-defects and 2,1 threo regio-defects.

## Summary of the invention

The present invention relates to a polypropylene composition for pipes, characterized in that the polypropylene composition comprises

- a random propylene-ethylene-$\alpha$-olefin terpolymer, wherein the $\alpha$-olefin is selected from a C4 to C8 $\alpha$-olefin, preferably selected from 1-butene or 1-hexene, more preferably is 1-hexene; wherein the random terpolymer has a relative content of isolated to block ethylene sequences, I(E), of more than 82.0%, preferably in the range of 85.0 to 99.0% wherein the I(E) content is defined by equation (I):

$$I(E) = \frac{fPEP}{(fEEE + f\text{PEE} + fPEP)} \times 100 \quad (I)$$

wherein

I(E) is the relative content of isolated to block ethylene sequences [in %];
fPEP is the mol fraction of propylene/ethylene/propylene sequences (PEP) in the sample;
fPEE is the mol fraction of propylene/ethylene/ethylene sequences (PEE) and of ethylene/ethylene/propylene sequences (EEP) in the sample;
fEEE is the mol fraction of ethylene/ethylene/ethylene sequences (EEE) in the sample; and

wherein all sequence concentrations are based on a statistical triad analysis of $^{13}$C-NMR data.

Further, the present invention relates to a pipe comprising the polypropylene composition as described above or below in an amount of more than 90.0 wt.-%, based on the total weight of the pipe.
Still further, the present invention relates to a use of the polypropylene composition as described above or below as a pipe.

## Detailed Description

*Polypropylene composition for pipes*

The inventive polypropylene composition for pipes comprises

- a random propylene-ethylene-$\alpha$-olefin terpolymer, wherein the $\alpha$-olefin is selected from a C4 to C8 $\alpha$-olefin; wherein the random terpolymer has a relative content of isolated to block ethylene sequences, I(E), of more than 82.0%, preferably in the range of 85.0 to 99.0% wherein the I(E) content is defined by equation (I):

$$I(E) = \frac{fPEP}{(fEEE + f\text{PEE} + f \quad)} \times 100 \quad (I)$$

wherein

I(E) is the relative content of isolated to block ethylene sequences [in %];
fPEP is the mol fraction of propylene/ethylene/propylene sequences (PEP) in the sample;
fPEE is the mol fraction of propylene/ethylene/ethylene sequences (PEE) and of ethylene/ethylene/propylene sequences (EEP) in the sample;
fEEE is the mol fraction of ethylene/ethylene/ethylene sequences (EEE) in the sample; and

wherein all sequence concentrations are based on a statistical triad analysis of $^{13}$C-NMR data.
It is preferred that the main component of the polypropylene composition is the random propylene-ethylene-$\alpha$-olefin terpolymer.
Accordingly, it is preferred that the polypropylene composition comprises the random propylene-ethylene-$\alpha$-olefin terpolymer in an amount of more than 90 wt.-%, preferably in the range of from 95.0 wt.-% to 99.9 wt.-%, more preferably of from 98.0 wt.-% to 99.9 wt.-%, based on the total weight of the polypropylene composition.

The polypropylene composition preferably has a melt flow rate (MFR$_2$), determined according to ISO 1133 at 230 °C at a load of 2.16 kg, in the range of from 0.10 to 10.0 g/10 min, more preferably of from 0.11 to 5.0 g/10 min, yet more preferably of from 0.15 to 2.0 g/10 min.

It is preferred that the polypropylene composition has a xylene cold soluble content (XCS), as determined according to ISO 16152, in the range of from 1.0 to 20.0 wt.-%, preferably in the range of from 3.0 to 15.0 wt.-%, more preferably in the range of from 5.0 to 11.0 wt.-%.

Although the polypropylene composition can have a considerably high xylene cold soluble content (XCS), it is preferred that the composition is monophasic. Accordingly, it is preferred that the composition does not comprise a matrix phase and a dispersed phase.

It is preferred that the polypropylene composition does not comprise further polymeric components besides the random propylene-ethylene-α-olefin terpolymer.

Thus, the polypropylene composition preferably consists of the random propylene-ethylene-α-olefin terpolymer in an amount in the range of from 98.0 wt.-% to 99.9 wt.-% and additives in an amount in the range of from 0.1 to 2.0 wt.-%, wherein the amounts are based on the total weight of the polypropylene composition.

Suitable additives are known in the state of the art. Typically, such additives are commercially available and for example described in "Plastic Additives Handbook", 6th edition 2009 of Hans Zweifel (pages 1141 to 1190).

In the following, preferred embodiments of the random propylene-ethylene-α-olefin terpolymer are described.

*Random* propylene-ethylene-α-olefin *terpolymer*

It is preferred that the random propylene-ethylene-α-olefin terpolymer is polymerized in the presence of a Ziegler-Natta-catalyst system.

Accordingly, the random propylene-ethylene-α-olefin terpolymer preferably has a content of 2,1-regio-defects, as determined by quantitative $^{13}$C-NMR spectroscopy, of less than 0.40 mol-%, preferably of less than 0.05 mol-% and more preferably of 0.0 mol-%.

The α-olefin of the random propylene-ethylene-α-olefin terpolymer is selected from a C4 to C8 α-olefin. Preferably, the α-olefin is selected from 1-butene or 1-hexene. More preferably, the α-olefin is 1-hexene.

Preferably, the random propylene-ethylene-α-olefin terpolymer comprises a total amount of units derived from ethylene (C2) in the range of from 0.5 to 7.0 mol-%, more preferably 1.0 to 5.0 mol-%, yet more preferably 1.5 to 3.5 mol-%, based on the total weight of the terpolymer, determined by quantitative $^{13}$C-NMR spectroscopy.

The amount of units derived from the α-olefin in the random propylene-ethylene-α-olefin terpolymer is preferably in the range of from 0.1 to 5.0 mol-%, more preferably of from 0.2 to 3.0 mol-%, yet more preferably of from 0.5 to 2.0 mol-%, based on the total weight of the terpolymer, determined by quantitative $^{13}$C-NMR spectroscopy.

It is further preferred that the molar ratio in the random propylene-ethylene-α-olefin terpolymer between units derived from ethylene and units derived from the α-olefin is in the range of from 5:1 to 1:1, more preferably of 3:1 to 2:1.

The remaining units besides the units derived from the ethylene and the α-olefin units of the random propylene-ethylene-α-olefin terpolymer are units derived from propylene.

The random propylene-ethylene-α-olefin terpolymer preferably has a melt flow rate (MFR$_2$), determined according to ISO 1133 at 230 °C at a load of 2.16 kg, in the range of from 0.10 to 10.0 g/10 min, more preferably of from 0.10 to 5.0 g/10 min, yet more preferably of from 0.10 to 0.50 g/10 min.

In a particularly preferred embodiment, the α-olefin of the random propylene-ethylene-α-olefin terpolymer is 1-hexene and the random propylene-ethylene-α-olefin terpolymer has a relative content of isolated to block hexene sequences, I(H), of more than 95.0 %, preferably in the range of from 98 % to 100 %, more preferably of from 99.5 % to 100 %, wherein the I(H) content is defined by equation (II):

$$I(H) = \frac{fPHP}{(fHHH + f\text{PHH} + fPHP)} \times 100 \quad (II)$$

wherein

I(H) is the relative content of isolated to block hexene sequences [in %];
fPHP is the mol fraction of propylene/hexene/propylene sequences (PHP) in the sample;
fPHH is the mol fraction of propylene/hexene/hexene sequences (PHH) and of hexene/hexene/propylene sequences (HHP) in the sample;
fHHH is the mol fraction of hexene/ hexene/hexene sequences (HHH) in the sample; and

wherein all sequence concentrations are based on a statistical triad analysis of $^{13}$C-NMR data.

The propylene-ethylene-α-olefin terpolymer is preferably monophasic.

It is preferred that the random propylene-ethylene-α-olefin terpolymer is a multimodal random propylene-ethylene-α-olefin terpolymer in view of at least the ethylene content and comprises at least two random propylene-ethylene-α-olefin terpolymer fractions (A) and (B), wherein the combined amount of the two random propylene-ethylene-α-olefin terpolymer fractions (A) and (B) is at least 90 wt.-%, preferably in the range of 95 to 100 wt.-%, based on the total weight of the random propylene-ethylene-α-olefin terpolymer.

Accordingly, it is preferred, that the multimodal propylene-ethylene-α-olefin terpolymer is bimodal, i.e. consists of the two random propylene-ethylene-α-olefin terpolymer fractions (A) and (B).

In the case that the random propylene-ethylene-α-olefin terpolymer is a multimodal random propylene-ethylene-α-olefin terpolymer, the ethylene content of the first random propylene-ethylene-α-olefin terpolymer fraction (A) is preferably in the range of 0.5 to 2.0 wt.-%, more preferably in the range of 0.7 to 1.3 wt.-%, and the ethylene content of the second random propylene-ethylene-α-olefin terpolymer fraction (B) is in the range of 1.5 to 3.5 wt.-%, more preferably in the range of 2.1 to 2.7 wt.-%. Preferably, the ethylene content of the first random propylene-ethylene-α-olefin terpolymer fraction (A) is lower than the ethylene content of the second random random propylene-ethylene-α-olefin terpolymer fraction (B), and more preferably the ethylene content of the first random propylene-ethylene-α-olefin terpolymer fraction (A) is at least 0.2 wt.-%, even more preferably 0.6 to 1.7 wt.-%, lower than the ethylene content of the second random propylene-ethylene-α-olefin terpolymer fraction (B).

The weight ratio between the first random propylene-ethylene-α-olefin terpolymer fraction (A) and the second random propylene-ethylene-α-olefin terpolymer fraction (B) is preferably in the range of 40:60 to 60:40.

Besides the multimodality in view of the ethylene content, the random propylene-ethylene-α-olefin terpolymer can also be multimodal in view of the melt flow rate $MFR_2$ of the fractions.

Accordingly, in a preferred embodiment, the $MFR_2$ of the first random propylene-ethylene-α-olefin terpolymer (A) is in the range of 0.3 to 1.0 g/10 min, more preferably in the range of 0.4 to 0.8 g/10 min, and the $MFR_2$ of the second random propylene-ethylene-α-olefin terpolymer fraction (B) is in the range of 0.04 to 0.5 g/10 min, more preferably in the range of 0.5 to 0.25 g/10 min. Preferably, the $MFR_2$ of the first random random propylene-ethylene-α-olefin terpolymer fraction (A) is higher than the $MFR_2$ of the second random propylene-ethylene-α-olefin terpolymer fraction (B), and more preferably the $MFR_2$ content of the first random propylene-ethylene-α-olefin terpolymer fraction (A) is at least 0.1 g/10 min, even more preferably 0.2 to 0.6 g/10 min, higher than the $MFR_2$ of the second random propylene-ethylene-α-olefin terpolymer fraction (B).

A preferred way of achieving multimodality is by polymerizing the respective polymer in a multistage polymerization process.

The random propylene-ethylene-α-olefin terpolymer is preferably polymerized in a multistage process, which is a sequential polymerization process with at least two polymerization reactors connected in series.

In a particularly preferred embodiment, a first polymer fraction of the random propylene-ethylene-α-olefin terpolymer is produced in a slurry phase reactor and subsequently a second polymer fraction of the random propylene-ethylene-α-olefin terpolymer is produced in a gas phase reactor.

A preferred multistage process is a "loop-gas phase"-process, as developed by Borealis (known as BORSTAR® technology) and is described e.g. in patent literature, such as in EP 0 887 379, WO 92/12182 WO 2004/000899, WO 2004/111095, WO 99/24478, WO 99/24479 or in WO 00/68315.

A further suitable slurry-gas phase process is the Spheripol® process of LyondellBasell Industries.

In a preferred embodiment, the random propylene-ethylene-α-olefin terpolymer is obtainable by the process comprising the steps of

a) Randomly polymerizing propylene, ethylene and an α-olefin in the presence of a Ziegler-Natta catalyst system in a first polymerization reactor for producing a first random propylene-ethylene-α-olefin terpolymer fraction (A);
b) Transferring a polymerization mixture comprising the Ziegler-Natta catalyst system and the first random propylene-ethylene-α-olefin terpolymer fraction (A) from the first polymerization reactor to a second polymerization reactor;
c) Polymerizing propylene, ethylene and the same α-olefin as in the first polymerization reactor in the presence of the Ziegler-Natta catalyst system in the second polymerization reactor for producing a second random propylene-ethylene-α-olefin terpolymer fraction (B);
d) Obtaining a random propylene-ethylene-α-olefin terpolymer comprising the first and second random propylene-ethylene-α-olefin terpolymer fractions (A and B).

The first polymerization reactor preferably is a liquid bulk slurry phase reactor, such as a loop reactor.

It is preferred that the operating temperature in the first polymerization reactor, preferably the loop reactor, is in the range from 62 to 72 °C, more preferably in the range from 65 to 69 °C.

Typically, the pressure in the first polymerization reactor, preferably in the loop reactor, is in the range from 4000 to 7000 kPa, preferably from 5000 to 6000 kPa.

The ethylene to propylene ratio (C2/C3 ratio) in the first polymerization reactor, preferably in the loop reactor, is preferably in the range from 2.0 to 10.0 mol/kmol, more preferably from 3.0 to 5.0 mol/kmol.

The $\alpha$-olefin, preferably 1-hexene to propylene ratio ($\alpha$-olefin /C3 ratio) in the first polymerization reactor, preferably in the loop reactor, is preferably in the range of from 10 to 250 mol/kmol, more preferably from 50 to 200 mol/kmol, yet more preferably 80 to 150 mol/kmol.

Preferably hydrogen is added in the first polymerization reactor in order to control the molecular weight, i.e. the melt flow rate $MFR_2$. Preferably the hydrogen to propylene ratio (H2/C3 ratio) in the first polymerization reactor, preferably the loop reactor, is in the range from 0.1 to 2.0 mol/kmol, more preferably from 0.2 to 1.0 mol/kmol.

It is preferred that the first random propylene-ethylene-$\alpha$-olefin terpolymer fraction (A) has a melt flow rate $MFR_2$ (230°C, 2.16 kg, ISO 1133) in the range of 0.1 to 2.0 g/10 min, preferably in the range of 0.2 to 1.0 g/10 min.

The second polymerization reactor is preferably a gas phase reactor, such as a fluidized bed gas phase reactor.

It is preferred that the operating temperature in the second polymerization reactor, preferably the gas phase reactor, is in the range from 75 to 85 °C, more preferably in the range from 78 to 82 °C.

Typically, the pressure in the second polymerization reactor, preferably in the gas phase reactor, is in the range from 2000 to 3000 kPa, preferably from 2200 to 2800 kPa.

The ethylene to propylene ratio (C2/C3 ratio) in the second polymerization reactor, preferably in the gas phase reactor, is in the range from 10.0 to 30.0 mol/kmol, more preferably from 15.0 to 25.0 mol/kmol.

The $\alpha$-olefin, preferably 1-hexene to propylene ratio ($\alpha$-olefin /C3 ratio) in the second polymerization reactor, preferably in the gas phase reactor, is preferably in the range from 20.0 to 60.0 mol/kmol, more preferably from 33.0 to 45.0 mol/kmol. It is preferred that the combined first and second random propylene-ethylene-$\alpha$-olefin terpolymer fractions (A) and (B) have a melt flow rate $MFR_2$ (230°C, 2.16 kg, ISO 1133) in the range of 0.05 to 0.5 g/10 min, preferably in the range of 0.1 to 0.3 g/10 min.

Preferably hydrogen is added in the second polymerization reactor in order to control the molecular weight, i.e. the melt flow rate $MFR_2$. Preferably the hydrogen to propylene ratio (H2/C3 ratio) in the second polypropylene reactor, preferably the gas phase reactor, is in the range from 0.1 to 2.0 mol/kmol, more preferably from 0.5 to 1.2 mol/kmol.

The preparation of the first and second polymer fractions (A) and (B) can comprise in addition to the (main) polymerization stages in the at least two polymerization reactors prior thereto a pre-polymerization in a pre-polymerization reactor upstream to the first polymerization reactor.

In the pre-polymerization reactor, a polypropylene is produced. The pre-polymerization is preferably conducted in the presence of the Ziegler-Natta catalyst system. According to this embodiment, the Ziegler-Natta catalyst system is introduced to the pre-polymerization step. However, this shall not exclude the option that at a later stage for instance further co-catalyst is added in the polymerization process, for instance in the first reactor. In one embodiment, all components of the Ziegler-Natta catalyst system are only added in the pre-polymerization reactor, if a pre-polymerization is applied.

The pre-polymerization reaction is typically conducted at a temperature of 0 to 60 °C, preferably from 10 to 40 °C, and more preferably from 12 to 30 °C.

The pressure in the pre-polymerization reactor is not critical but must be sufficiently high to maintain the reaction mixture in liquid phase. Thus, the pressure may be from 4000 to 7000 kPa.

In a preferred embodiment, the pre-polymerization is conducted as bulk slurry polymerization in liquid propylene, i.e. the liquid phase mainly comprises propylene, optionally with inert components dissolved therein.

It is possible to add other components also to the pre-polymerization stage. Thus, hydrogen may be added into the pre-polymerization stage to control the molecular weight of the polypropylene as is known in the art. Further, antistatic additives may be used to prevent the particles from adhering to each other or to the walls of the reactor.

The precise control of the pre-polymerization conditions and reaction parameters is within the skill of the art.

Due to the above defined process conditions in the pre-polymerization, preferably a mixture of the Ziegler-Natta catalyst system and the polypropylene produced in the pre-polymerization reactor is obtained. Preferably, the Ziegler-Natta catalyst system is (finely) dispersed in the polypropylene. In other words, the Ziegler-Natta catalyst system introduced in the pre-polymerization reactor are split into smaller fragments that are evenly distributed within the growing polypropylene. The sizes of the introduced Ziegler-Natta catalyst system as well as of the obtained fragments are not of essential relevance for the instant invention and within the skilled knowledge.

As mentioned above, if a pre-polymerization is used, subsequent to said pre-polymerization, the mixture of the Ziegler-Natta catalyst system and the polypropylene produced in the pre-polymerization reactor is transferred to the first polymerization reactor. Typically, the total amount of polypropylene produced in the pre-polymerization reactor is rather low and typically not more than 5.0 wt.-%, more preferably not more than 4.0 wt.-%, still more preferably in the range from 0.5 to 4.0 wt.-%, like in the range from 1.0 of to 3.0 wt.-%, based on the total combined weight of the first and second polymer fractions.

In case that pre-polymerization is not used, propylene and the other ingredients such as the Ziegler-Natta catalyst system can be directly introduced into the first polymerization reactor.

The residence times of the polymerization mixtures in the different polymerization stages are adjusted to obtain the amounts of the first and second polymer fractions in the combined first and second polymer fractions.

The amount of the polypropylene produced in the pre-polymerization reactor, if present, is generally added to the amount of the first propylene polymer fraction.

Preferably the first random propylene-ethylene-$\alpha$-olefin terpolymer fraction (A) is present in an amount of from 40 to 60 wt.-%, more preferably from 45 to 55 wt.-%, based on the total weight of the random propylene-ethylene-$\alpha$-olefin terpolymer.

Preferably the second random propylene-ethylene-$\alpha$-olefin terpolymer fraction (B) is present in an amount of from 37 to 57 wt.-%, more preferably from 42 to 52 wt.-%, based on the total weight of the random propylene-ethylene-$\alpha$-olefin terpolymer.

Preferably the catalyst used in the present invention is a >4$^{th}$ generation, high yield Ziegler Natta catalyst (ZN-C), which comprises compounds of a transition metal of Group 4 to 6 of IUPAC, like titanium, a Group 2 metal compound, like a magnesium, and an internal donor being a non-phthalic compound, preferably a non-phthalic acid ester and/or a non-phthalic diether, the ester more preferably being a diester of non-phthalic dicarboxylic acids, the diether more preferably being a 1,3-diether. Thus, the catalyst is fully free of undesired phthalic compounds.

Further, the catalyst is preferably a solid catalyst with an external support material, like silica or $MgCl_2$, preferably $MgCl_2$.

Preferably the Group 2 metal is magnesium. The transition metal compound of Group 4 to 6 is preferably a titanium compound (TC), most preferably a titanium halide, like $TiCl_4$.

*Pipe and Use*

The invention further relates to a pipe comprising the polypropylene composition as described above in an amount of more than 90.0 wt.-%, preferably consisting of the polypropylene composition as described above.

The pipe is preferably used for hot and/or cold water applications, more preferably is a pressure pipe for hot and/or cold water applications.

Preferably, the pipe has a time to failure in a pipe pressure test according to ISO 1167-1 and-2 on pipes having a diameter of 32 mm and a wall thickness of 3 mm at a hoop stress of 5 MPa at a temperature of 95 °C of at least 4000 h, more preferably of at least 4500 h, even more preferably of at least 5000 h, wherein the type of failure is a ductile failure.

The time to failure in a pipe pressure test according to ISO 1167-1 and-2 on pipes having a diameter of 32 mm and a wall thickness of 3 mm at a hoop stress of 16 MPa at a temperature of 20 °C is preferably in the range of from more than 4000 h to 10000 h, more preferably in the range of from more than 4500 h to 9000 h, yet more preferably in the range of from more than 5000 h to 8000 h, wherein the type of failure is a ductile failure.

Further, the invention also relates to the use of the polypropylene composition as described above as a pipe, preferably as a pressure pipes for hot and/or cold water applications.

All aspects the polypropylene composition described above or below also apply to the pipe and the use of the invention.

Examples

**1. Determination methods**

The following definitions of terms and determination methods apply for the above general description of the invention as well as to the below examples unless otherwise defined.

**Quantification of microstructure by NMR spectroscopy**

Isotacticity and regio-regularity

Quantitative nuclear-magnetic resonance (NMR) spectroscopy was used to quantify the isotacticity and regio-regularity of the polymers.

Quantitative $^{13}C\{^1H\}$ NMR spectra were recorded in the solution-state using a Bruker Advance III 400 NMR spectrometer operating at 400.15 and 100.62 MHz for $^1H$ and $^{13}C$ respectively. All spectra were recorded using a $^{13}C$ optimised 10 mm extended temperature probehead at 125°C using nitrogen gas for all pneumatics.

For polymers approximately 200 mg of material was dissolved in *1,2*-tetrachloroethane-$d_2$ (TCE-$d_2$). To ensure a homogenous solution, after initial sample preparation in a heat block, the NMR tube was further heated in a rotatary oven for at least 1 hour. Upon insertion into the magnet the tube was spun at 10 Hz. This setup was chosen primarily for the high resolution needed for tacticity distribution quantification (Busico, V., Cipullo, R., Prog. Polym. Sci. 26 (2001) 443; Busico, V.; Cipullo, R., Monaco, G., Vacatello, M., Segre, A.L., Macromolecules 30 (1997) 6251). Standard single-pulse excitation was employed utilising the NOE and bi-level WALTZ16 decoupling scheme (Zhou, Z., Kuemmerle, R., Qiu, X., Redwine, D., Cong, R., Taha, A., Baugh, D. Winniford, B., J. Mag. Reson. 187 (2007) 225; Busico, V., Carbonniere, P., Cipullo, R.,

Pellecchia, R., Severn, J., Talarico, G., Macromol. Rapid Commun. 2007, 28, 11289). A total of 8192 (8k) transients were acquired per spectra.

Quantitative $^{13}$C{$^1$H} NMR spectra were processed, integrated and relevant quantitative properties determined from the integrals using proprietary computer programs.

For propylene homopolymers all chemical shifts are internally referenced to the methyl isotactic pentad (mmmm) at 21.85 ppm.

Characteristic signals corresponding to regio defects (Resconi, L., Cavallo, L., Fait, A., Piemontesi, F., Chem. Rev. 2000, 100, 1253; Wang, W-J., Zhu, S., Macromolecules 33 (2000), 1157; Cheng, H. N., Macromolecules 17 (1984), 1950) or comonomer were observed.

The tacticity distribution was quantified through integration of the methyl region between 23.6-19.7 ppm correcting for any sites not related to the stereo sequences of interest (Busico, V., Cipullo, R., Prog. Polym. Sci. 26 (2001) 443; Busico, V., Cipullo, R., Monaco, G., Vacatello, M., Segre, A.L., Macromolecules 30 (1997) 6251).

Specifically the influence of regio-defects and comonomer on the quantification of the tacticity distribution was corrected for by subtraction of representative regio-defect and comonomer integrals from the specific integral regions of the stereo sequences.

The isotacticity was determined at the pentad level and reported as the percentage of isotactic pentad (mmmm) sequences with respect to all pentad sequences:

$$[mmmm] \% = 100 * (mmmm \,/\, sum\ of\ all\ pentads)$$

The presence of 2,1 erythro regio-defects was indicated by the presence of the two methyl sites at 17.7 and 17.2 ppm and confirmed by other characteristic sites. Characteristic signals corresponding to other types of regio-defects were not observed (Resconi, L., Cavallo, L., Fait, A., Piemontesi, F., Chem. Rev. 2000, 100, 1253).

The amount of 2,1 erythro regio-defects was quantified using the average integral of the two characteristic methyl sites at 17.7 and 17.2 ppm:

$$P_{21e} = (I_{e6} + I_{e8}) \,/\, 2$$

The amount of 1,2 primary inserted propylene was quantified based on the methyl region with correction undertaken for sites included in this region not related to primary insertion and for primary insertion sites excluded from this region:

$$P_{12} = I_{CH3} + P_{12e}$$

The total amount of propylene was quantified as the sum of primary inserted propylene and all other present regio-defects:

$$P_{total} = P_{12} + P_{21e}$$

The mole percent of 2,1 erythro regio-defects was quantified with respect to all propylene:

$$[21e]\ mol\text{-}\% = 100 * (P_{21e} \,/\, P_{total})$$

Propylene-ethylene-hexene terpolymer

Quantitative nuclear-magnetic resonance (NMR) spectroscopy was used to quantify the comonomer content of the polymers.

Quantitative $^{l3}$C{$^1$H} NMR spectra recorded in the molten-state using a Bruker Avance NEO 500 NMR spectrometer operating at 500.13 and 125.76 MHz for $^1$H and $^{13}$C respectively. All spectra were recorded using a $^{13}$C optimised 7 mm magic-angle spinning (MAS) probehead at 180°C using nitrogen gas for all pneumatics. Approximately 200 mg of material was packed into a 7 mm outer diameter zirconia MAS rotor and spun at 4 kHz. This setup was chosen primarily for the high sensitivity needed for rapid identification and accurate quantification. { klimke06, parkinson07, castignolles09} Standard single-pulse excitation was employed utilising the NOE at short recycle delays of 3s {pollard04, klimke06} and the RS-HEPT decoupling scheme{fillip05,griffin07}. A total of 1024 (1k) transients were acquired per spectra.

Quantitative $^{13}$C{$^1$H} NMR spectra were processed, integrated and relevant quantitative properties determined from the integrals. All chemical shifts are internally referenced to the methyl isotactic pentad (mmmm) at 21.85 ppm.

The amount of primary (1,2) inserted propene was quantified based on the propene methylene sites between 48.1 and 45.0 ppm ($I_{CH2}$) with correction for any included sites not related to primary insertion:

$$P_{12} = I_{CH2} + H + E + 0.5*EE$$

$$Ptotal = P_{12}$$

Characteristic signals corresponding to the incorporation of 1-hexene were observed and the comonomer fraction calculated as the fraction of 1-hexene in the polymer with respect to all monomer in the polymer:

$$fHtotal = Htotal / (Etotal + Ptotal + Htotal)$$

The amount isolated 1-hexene incorporated in PPHPP sequences was quantified using the integral of the aB4 sites at 44.2 ppm accounting for the number of reporting sites per comonomer:

$$H = I\alpha B4 / 2$$

With no sites indicative of consecutive incorporation observed the total 1-hexen comonomer content was calculated solely on this quantity:

$$Htotal = H$$

Characteristic signals corresponding to the incorporation of ethylene were observed and the comonomer fraction calculated as the fraction of ethylene in the polymer with respect to all monomer in the polymer:

$$fEtotal = Etotal / (Etotal + Ptotal + Htotal)$$

The amount isolated and non-consecutive ethylene incorporated in PPEPP and PPEPEPP sequences respectively was quantified using the integral of the S$\beta\beta$ sites at 24.3 ppm accounting for the number of reporting sites per comonomer:

$$E = I_{S\beta\beta}$$

When observable the amount double consecutively incorporated ethylene in PPEEPP sequences was quantified using the integral of the S$\beta\delta$ site at 27.1 ppm accounting for the number of reporting sites per comonomer:

$$EE = I_{S\beta\delta}$$

When observable the amount triple or longer consecutively incorporated ethylene in PP(E)$_n$PP sequences was quantified using the integral of the S$\delta\delta$ and S$\gamma\delta$ sites at 30.1 and 30.4 ppm accounting for the number of reporting sites per comonomer:

$$EEE = (I_{S\delta\delta} / 2) + (I_{S\gamma\delta} / 4)$$

The total ethylene content was calculated based on the sum of observable isolated and consecutively incorporated ethylene:

$$Etotal = E + EE + EEE$$

The mole percent comonomer incorporation is calculated from the mole fraction:

$$H [mol\%] = 100 * fHtotal$$

$$E \, [mol\%] = 100 * fEtotal$$

The weight percent comonomer incorporation is calculated from the mole fraction:

H [wt%] = 100 * (fHtotal*84.16)/(fEtotal*28.05)+(fHtotal*84.16)+((1-(fFtotal+fHtotal))*42.08)) E[wt%] = 100 * (fEtotal*28.05)/(fEtotal*28.05)+(fHtotal*84.16)+((1-(fEtotal+fHtotal))*42.08))

References:

klimke06: Klimke, K., Parkinson, M., Piel, C., Kaminsky, W., Spiess, H.W., Wilhelm, M., Macromol. Chem. Phys. 2006;207:382.

parkinson07: Parkinson, M., Klimke, K., Spiess, H.W., Wilhelm, M., Macromol. Chem. Phys. 2007;208:2128.

pollard04: Pollard, M., Klimke, K., Graf, R., Spiess, H.W., Wilhelm, M., Sperber, O., Piel, C., Kaminsky, W., Macromolecules 2004;37:813.

filip05: Filip, X., Tripon, C., Filip, C., J. Mag. Resn. 2005, 176, 239

griffin07: Griffin, J.M., Tripon, C., Samoson, A., Filip, C., and Brown, S.P., Mag. Res. in Chem. 2007 45, S1, S198

castignolles09: Castignolles, P., Graf, R., Parkinson, M., Wilhelm, M., Gaborieau, M., Polymer 50 (2009) 2373

**Calculation** of the ethylene comonomer content of the second random propylene-ethylene-$\alpha$-olefin terpolymer fraction (B):

$$\frac{C_2(terpolymer) - w(A) \times C_2(A)}{w(B)} = C_2(B)$$

wherein

| | |
|---|---|
| w(A) | is the weight fraction [split wt%] of the first random propyleneethylene-$\alpha$-olefin terpolymer fraction (A), |
| w(B) | is the weight fraction [split wt %] of second random propyleneethylene-$\alpha$-olefin terpolymer fraction (B), |
| $C_2(A)$ | is the comonomer content [in wt-%] of the first first random propylene-ethylene-$\alpha$-olefin terpolymer fraction (A), |
| $C_2(terpolymer)$ | is the comonomer content [in wt-%] of the random propyleneethylene-$\alpha$-olefin terpolymer, |
| $C_2(B)$ | is the calculated comonomer content [in wt-%] of the second random propylene-ethylene-$\alpha$-olefin terpolymer fraction (B). |

The ethylene comonomer content in mol% can be obtained analogously.
**Calculation** of $\alpha$-olefin ($C_{4-8}$) comonomer content of the second random propylene-ethylene-$\alpha$-olefin terpolymer fraction (B):

$$\frac{C_{4-8}(terpolymer) - w(A) \times C_{4-8}(A)}{w(B)} = C_{4-8}(B)$$

wherein

| | |
|---|---|
| w(A) | is the weight fraction [split wt%] of the first random propyleneethylene-$\alpha$-olefin terpolymer fraction (A), |

| | |
|---|---|
| w(B) | is the weight fraction [split wt %] of second random propyleneethylene-$\alpha$-olefin terpolymer fraction (B), |
| $C_{4-8}$(A) | is the comonomer content [in wt-%] of the first random propyleneethylene-$\alpha$-olefin terpolymer fraction (A), |
| $C_{4-8}$(terpolymer) | is the comonomer content [in wt-%] of the random propyleneethylene-$\alpha$-olefin terpolymer, |
| $C_{4-8}$(B) | is the calculated comonomer content [in wt-%] of the second propylene-ethylene-$\alpha$-olefin terpolymer fraction (B). |

The $\alpha$-olefin ($C_{4-8}$) comonomer content in mol% can be obtained analogously.

**Melt Flow Rate**

The melt flow rate (MFR) was determined according to ISO 1133 and is indicated in g/10 min. The MFR is an indication of the flowability, and hence the processability, of the polymer. The higher the melt flow rate, the lower the viscosity of the polymer. The $MFR_2$ of polypropylene is determined at a temperature of 230 °C and a load of 2.16 kg.

**Calculation** of the $MFR_2$ of the second random propylene-ethylene-$\alpha$-olefin terpolymer fraction (B):

$$10^{\frac{\log(MFR_2\ (terpolymer)) - w(A) \times \log(MFR_2(A))}{w(B)}} = MFR_2(B)$$

| | |
|---|---|
| w(A) | is the weight fraction [split wt%] of the first random propyleneethylene-$\alpha$-olefin terpolymer fraction (A), |
| w(B | is the weight fraction [split wt %] of second random propyleneethylene-$\alpha$-olefin terpolymer fraction (B), |
| $MFR_2$(A) | is the $MFR_2$ [in g/10 min] of the first random propylene-ethylene-$\alpha$-olefin terpolymer fraction (A), |
| $MFR_2$(terpolymer) | is the $MFR_2$ [in g/10 min] of the random propylene-ethylene-$\alpha$-olefin terpolymer, |
| $MFR_2$(B) | is the calculated $MFR_2$ [in g/10 min] of the second random propyleneethylene-$\alpha$-olefin terpolymer fraction (B). |

**Xylene Solubles (XCS)**

The xylene soluble (XCS) fraction as defined and described in the present invention was determined in line with ISO 16152 as follows: 2.0 g of the polymer were dissolved in 250 ml p-xylene at 135 °C under agitation. After 30 minutes, the solution was allowed to cool for 15 minutes at ambient temperature and then allowed to settle for 30 minutes at 25 +/- 0.5 °C. The solution was filtered with filter paper into two 100 ml flasks. The solution from the first 100 ml vessel was evaporated in nitrogen flow and the residue dried under vacuum at 90 °C until constant weight is reached. The xylene soluble fraction (percent) can then be determined as follows: XS [%] = $(100 \cdot m \cdot V_0)/(m_0 \cdot V)$; $m_0$ = initial polymer amount [g]; m = weight of residue [g]; $V_0$ = initial volume [ml]; V = volume of analysed sample [ml].

**Flexural modulus**

The flexural modulus was determined according to ISO 178. The test specimens have a dimension of 80 x 10 x 4.0 mm$^3$ (length x width x thickness) and are prepared by injection molding according to EN ISO 1873-2. The length of the span between the supports is 64 mm, the test speed 2 mm/min.

**Notched impact strength (NIS)**

The Charpy notched impact strength (NIS) was measured according to ISO 179 1eA at +23 °C, using injection moulded bar test specimens of 80 x 10 x 4 mm$^3$ prepared in accordance with EN ISO 1873-2.

**Pipe pressure test**

The pressure test performance of pipes produced from the inventive composition and the comparative composition was tested in accordance with ISO 1167-1 and-2. The pipes having a diameter of 32 mm and a wall thickness of 3 mm were produced in accordance with ISO 1167-2 on a conventional pipe extrusion line, then subjected to a circumferential (hoop) stress of 5.0 MPa at a temperature of 95°C in a water-in-water setup in accordance with ISO 1167-1. The time in hours to failure was registered.

**2. Experimental**

The polymerization of an inventive random $C_3C_2C_6$ terpolymer (IT) was carried out in pilot scale. A Borstar® loop - gas phase reactor set up was used.

As the catalyst, the Ziegler-Natta-catalyst system ZN180-2M, commercially available from LyondellBasell Industries, was used.

As a cocatalyst, triethyl-aluminium (TEAL) was used.

The Ziegler-Natta catalyst system was introduced in the pre-polymerization reactor. The polymerization conditions are shown in table 1.

Table 1: Polymerization conditions for the $C_3C_2C_6$ terpolymer (IT)

|  | IT |
|---|---|
| **Prepolymerization** |  |
| Temp. (°C) | 20.0 |
| Press. (kPa) | 5464 |
| Catalyst feeding rate (g/h) | 0.9 |
| TEAL feed (g/ t C3) | 150 |
| H2 (g/h) | 0.8 |
| Residence time (h) | 0.4 |
| **Loop reactor (Fraction A)** |  |
| Temp. (°C) | 67.0 |
| Press. (kPa) | 5437 |
| Feed H2/C3 ratio (mol/kmol) | 0.29 |
| Feed C2/C3 ratio (mol/kmol) | 4.1 |
| Feed C6/C3 ratio (mol/kmol) | 116 |
| Polymer Split (wt.-%) | 53.2 |
| MFR$_2$ (g/10 min) | 0.56 |
| C2 (wt.-%) | 1.0 |
| C6 (wt.-%) | 1.8 |
| **Gas phase reactor (Fraction B)** |  |
| Temp. (°C) | 80.1 |
| Press. (kPa) | 2500 |
| H2/C3 ratio (mol/kmol) | 0.80 |
| C2/C3 ratio (mol/kmol) | 20.1 |
| C6/C3 ratio (mol/kmol) | 38.6 |
| calc. C2 in GPR (wt.-%) | 2.3 |
| calc. C6 in GPR (wt.-%) | 1.8 |
| calc. MFR$_2$ in GPR (g/10 min) | 0.08 |
| Polymer Split (wt.-%) | 46.8 |
| **Mixer** |  |
| MFR$_2$ (g/10 min) | 0.23 |
| XCS (wt.-%) | 7.38 |
| 2,1 regio-defects (mol-%) | 0.0 |

The obtained random $C_3C_2C_6$ terpolymer (IT) was compounded in amounts as shown in table 2 with the following additives:

- KINOX-30G (1,3,5-Trimethyl-2,4,6-tris(3,5-di-tert-butyl- 4-hydroxybenzyl)benzene, commercially available from HPL Additives Limited; CAS-no. 1709-70-2),
- Irganox 1010 (pentaerythrityl-tetrakis(3-(3',5'-di-tert. butyl-4-hydroxyphenyl)-propionate, available from BASF AG, Germany; CAS-no. 6683-19-8),
- Irgafos 168 (tris (2,4-di-t-butylphenyl) phosphite, available from BASF AG, Germany; CAS-no. 31570-04-4), and
- Calcium stearate (CAS-no.1592-23-0, commercially available from Faci, Italy).

As a comparative example CE, the Ziegler-Natta catalyzed random $C_3C_2C_6$ terpolymer RP1887, commercially available from LyondellBasell Industries, having the properties as shown in table 2 was used.

*Table 2: Ingredients of the compositions and the properties.*

| | | IE | CE |
|---|---|---|---|
| IT | wt.-% | 99.35 | |
| KINOX-30G | wt.-% | 0.24 | |
| I1010 | wt.-% | 0.24 | |
| I168 | wt.-% | 0.1 | |
| CaSt | wt.-% | 0.07 | |
| RP1887 | wt.-% | | 100.00 |
| **Properties** | | | |
| C2 | wt.-% | 1.6 | 1.7 |
| C2 | mol% | 2.4 | 2.6 |
| C6 | wt.-% | 1.8 | 2.3 |
| C6 | mol% | 0.9 | 1.1 |
| MFR$_2$ | g/10min | 0.23 | 0.22 |
| XCS | wt.-% | 7.9 | 8.3 |
| **Randomness** | | | |
| Ethylene (E) | | | |
| PEP | mol% | 2.15 | 2.07 |
| PEE | mol% | 0.24 | 0.46 |
| EEE | mol% | 0 | 0 |
| I(E) | % | 90.0 | 81.8 |
| Hexene (H) | | | |
| PHP | mol% | 0.88 | 1.11 |
| PHH | mol% | 0 | 0 |
| HHH | mol% | 0 | 0 |
| I(H) | % | 100 | 100 |
| **Mechanical properties** | | | |
| FM | MPa | 820 | 858 |
| NIS | kJ/m$^2$ | 9.8 | 13.8 |

As can be seen in table 2, the amount of isolated to block ethylene sequences I(E) of the inventive $C_3C_2C_6$ terpolymer was higher than the I(E) of the comparative $C_3C_2C_6$ terpolymer CE.

From the inventive composition IE and the comparative CE, the inventive pipe IP and the comparative pipe CP were produced on a Battenfeld Pro pipe extrusion line having a diameter of 32 mm and a wall thickness of 3 mm.

The typical conditions are following:

Melt temperature: 224 °C
Output: 30 kg/h
Screw speed: 38 rpm
Cooling water temperature: 20 °C
Vacuum spray tank: 0.23 bar
Water flow in calibrator inlet: 4 l/h.
The pipes had the following times to failure in a pipe pressure test.

*Table 3: Pipe properties of the inventive and comparative compositions.*

| Pipe | | IP | CP |
|---|---|---|---|
| Pressure resistance 95°C, 5.0 MPa | time to failure [h] | 6231 | 3000 |
| | Type of failure \| | Ductile | Ductile |

As can be seen, a pipe produced from a similar $C_2C_3C_6$ terpolymer but with a higher content of isolated to block ethylene sequences I(E) has a more than twice as long time to failure in a pressure resistance test.

**Claims**

1. A polypropylene composition for pipes, **characterized in that** the polypropylene composition comprises

   - a random propylene-ethylene-α-olefin terpolymer, wherein the α-olefin is selected from a C4 to C8 α-olefin;

   wherein the random terpolymer has a relative content of isolated to block ethylene sequences, I(E), of more than 82.0%, %, preferably in the range of 85.0 to 99.0%, wherein the I(E) content is defined by equation (I):

   $$I(E) = \frac{fPEP}{(fEEE + f\mathrm{PEE} + fP\quad)} \times 100 \quad (I)$$

   wherein

   I(E) is the relative content of isolated to block ethylene sequences [in %];
   fPEP is the mol fraction of propylene/ethylene/propylene sequences (PEP) in the sample;
   fPEE is the mol fraction of propylene/ethylene/ethylene sequences (PEE) and of ethylene/ethylene/-propylene sequences (EEP) in the sample;
   fEEE is the mol fraction of ethylene/ethylene/ethylene sequences (EEE) in the sample; and

   wherein all sequence concentrations are based on a statistical triad analysis of $^{13}$C-NMR data.

2. The polypropylene composition of claim 1, **characterized in that** the composition comprises the random propylene-ethylene-α-olefin terpolymer in an amount of more than 90 wt.-%, preferably in the range of from 95.0 wt.-% to 99.9 wt.-%, more preferably of from 98.0 wt.-% to 99.9 wt.-% based on the total weight of the composition.

3. The polypropylene composition of any of the preceding claims, **characterized in that** random propylene-ethylene-α-olefin terpolymer has a content of 2,1-region-defects, as determined by quantitative $^{13}$C-NMR spectroscopy, of less than 0.40 mol-%, preferably of less than 0.05 mol-%, more preferably of 0.0 mol-%.

4. The polypropylene composition of any of the preceding claims, **characterized in that** the random propylene-ethylene-α-olefin terpolymer comprises a total amount of units derived from ethylene (C2) in the range of from 0.5 to 7.0 mol%, preferably 1.0 to 5.0 mol-%, more preferably 1.5 to 3.5 mol-%, based on the total weight of the terpolymer, determined by quantitative $^{13}$C-NMR spectroscopy.

5. The polypropylene composition of any of the preceding claims, **characterized in that** the amount of units derived from the α-olefin in the random propylene-ethylene-α-olefin terpolymer is in the range of from 0.1 to 5.0 mol-%, preferably of from 0.2 to 3.0 mol-%, yet more preferably of from 0.5 to 2.0 mol-%, based on the total weight of the terpolymer, determined by quantitative $^{13}$C-NMR spectroscopy-

6. The polypropylene composition of any of the preceding claims, **characterized in that** the α-olefin of the random propylene-ethylene-α-olefin terpolymer is 1-butene or 1-hexene, preferably is 1-hexene.

7. The polypropylene composition of any of the preceding claims, **characterized in that** the random propylene-ethylene-α-olefin terpolymer has a melt flow rate (MFR$_2$), determined according to ISO 1133 at 230 °C at a load of 2.16 kg, in the range of from 0.10 to 10.0 g/10 min, preferably of from 0.10 to 5.0 g/10 min, more preferably of from 0.10 to 0.50 g/10 min.

8. The polypropylene composition of any of the preceding claims, **characterized in that** the polypropylene composition has a melt flow rate (MFR$_2$), determined according to ISO 1133 at 230 °C at a load of 2.16 kg, in the range of from 0.10 to 10.0 g/10 min, preferably of from 0.11 to 5.0 g/10 min, more preferably of from 0.15 to 2.0 g/10 min.

9. The polypropylene composition of any of the preceding claims, **characterized in that** the α-olefin of the random propylene-ethylene-α-olefin terpolymer is 1-hexene and the random propylene-ethylene-α-olefin terpolymer has a relative content of isolated to block hexene sequences, I(H), of more than 95.0 %, preferably in the range of from 98 % to 100 %, more preferably of from 99.5 % to 100 %, wherein the I(H) content is defined by equation (II):

$$I(H) = \frac{fPHP}{(fHHH+fPHH+fPHP)} \times 100 \quad (II)$$

wherein

I(H) is the relative content of isolated to block hexene sequences [in %];
fPHP is the mol fraction of propylene/hexene/propylene sequences (PHP) in the sample;
fPHH is the mol fraction of propylene/hexene/hexene sequences (PHH) and of hexene/hexene/propylene sequences (HHP) in the sample;
fHHH is the mol fraction of hexene/ hexene/hexene sequences (HHH) in the sample; and

wherein all sequence concentrations are based on a statistical triad analysis of $^{13}$C-NMR data.

10. The polypropylene composition of any of the preceding claims, **characterized in that** the composition has a xylene cold soluble content (XCS), as determined according to ISO 16152, in the range of from 1.0 to 20.0 wt.-%, preferably in the range of from 3.0 to 15.0 wt.-%, more preferably in the range of from 5.0 to 11.0 wt.-%.

11. The polypropylene composition of any of the preceding claims, **characterized in that**

- the propylene-ethylene-α-olefin terpolymer is monophasic, and
- the polypropylene composition is monophasic.

12. The polypropylene composition of any of the preceding claims, **characterized in that** the polypropylene composition consists of the random propylene-ethylene-α-olefin terpolymer in an amount in the range of from 98.0 wt.-% to 99.9 wt.-% and additives in an amount in the range of from 0.1 to 2.0 wt.-%, wherein the amounts are based on the total weight of the polypropylene composition.

13. A pipe comprising the polypropylene composition of any of the preceding claims in an amount of more than 90.0 wt.-%, preferably consisting of the polypropylene composition of any of the preceding claims, wherein the pipe is preferably for hot and/or cold water applications, more preferably is a pressure pipe for hot and/or cold water applications.

14. The pipe of claim 13, **characterized in that** the pipe has a time to failure in a pipe pressure test according to ISO 1167-1 and-2 on pipes having a diameter of 32 mm and a wall thickness of 3 mm at a hoop stress of 5 MPa at a temperature of 95 °C of at least 4000 h, preferably of at least 4500 h, more preferably of at least 5000 h, wherein the type of failure is a ductile failure.

15. Use of the polypropylene composition of any claims 1 to 12 as a pipe, preferably as a pressure pipe for hot and/or cold water applications.

Europäisches
Patentamt

European
Patent Office

Office européen
des brevets

# EUROPEAN SEARCH REPORT

**Application Number**

EP 24 17 3395

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2023/046824 A1 (BOREALIS AG [AT]) 30 March 2023 (2023-03-30) * the whole document * ----- | 1-12 | INV. C08F210/06 C08L23/14 C08F2/00 |
| X | US 7 799 397 B2 (BOREALIS TECH OY [FI]) 21 September 2010 (2010-09-21) * the whole document * ----- | 1-15 | |
| X | EP 2 653 496 A1 (BASELL POLYOLEFINE GMBH [DE]) 23 October 2013 (2013-10-23) * the whole document * ----- | 1-15 | |
| X | US 11 505 686 B2 (BOREALIS AG [AT]) 22 November 2022 (2022-11-22) * the whole document * ----- | 1-12 | |
| | | | **TECHNICAL FIELDS SEARCHED (IPC)** |
| | | | C08L |

The present search report has been drawn up for all claims

| Place of search | Date of completion of the search | Examiner |
|---|---|---|
| Munich | 25 October 2024 | Balmer, J |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
............................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 17 3395

This annex lists the patent family members relating to the patent documents cited in the above-mentioned European search report.
The members are as contained in the European Patent Office EDP file on
The European Patent Office is in no way liable for these particulars which are merely given for the purpose of information.

25-10-2024

| Patent document cited in search report | | Publication date | Patent family member(s) | | Publication date |
|---|---|---|---|---|---|
| WO 2023046824 | A1 | 30-03-2023 | CN | 118019771 A | 10-05-2024 |
| | | | EP | 4405403 A1 | 31-07-2024 |
| | | | WO | 2023046824 A1 | 30-03-2023 |
| US 7799397 | B2 | 21-09-2010 | AT | E315592 T1 | 15-02-2006 |
| | | | CN | 1604922 A | 06-04-2005 |
| | | | DE | 60208712 T2 | 02-11-2006 |
| | | | EP | 1312623 A1 | 21-05-2003 |
| | | | EP | 1448631 A1 | 25-08-2004 |
| | | | ES | 2258163 T3 | 16-08-2006 |
| | | | IL | 161973 A | 15-05-2007 |
| | | | JP | 4208718 B2 | 14-01-2009 |
| | | | JP | 2005509121 A | 07-04-2005 |
| | | | KR | 20040075865 A | 30-08-2004 |
| | | | PL | 206543 B1 | 31-08-2010 |
| | | | PT | 1448631 E | 31-05-2006 |
| | | | RU | 2310789 C2 | 20-11-2007 |
| | | | US | 2005053741 A1 | 10-03-2005 |
| | | | WO | 03042260 A1 | 22-05-2003 |
| EP 2653496 | A1 | 23-10-2013 | NONE | | |
| US 11505686 | B2 | 22-11-2022 | CN | 111465648 A | 28-07-2020 |
| | | | EP | 3735441 A1 | 11-11-2020 |
| | | | ES | 2909013 T3 | 04-05-2022 |
| | | | KR | 20200083636 A | 08-07-2020 |
| | | | RU | 2754076 C1 | 25-08-2021 |
| | | | US | 2020385556 A1 | 10-12-2020 |
| | | | WO | 2019134904 A1 | 11-07-2019 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2914658 A1
- EP 0887379 A
- WO 9212182 A
- WO 2004000899 A
- WO 2004111095 A
- WO 9924478 A
- WO 9924479 A
- WO 0068315 A

**Non-patent literature cited in the description**

- *Chemical Reviews*, 2000, vol. 100 (4), 1316-1327
- **HANS ZWEIFEL**. Plastic Additives Handbook. 2009, 1141-1190
- **BUSICO, V.** ; **CIPULLO, R.** *Prog. Polym. Sci.*, 2001, vol. 26, 443
- **BUSICO, V.** ; **CIPULLO, R.** ; **MONACO, G.** ; **VACATELLO, M.** ; **SEGRE, A.L.** *Macromolecules*, 1997, vol. 30, 6251
- **ZHOU, Z.** ; **KUEMMERLE, R.** ; **QIU, X.** ; **REDWINE, D.** ; **CONG, R.** ; **TAHA, A.** ; **BAUGH, D.** ; **WINNIFORD, B.** *J. Mag. Reson.*, 2007, vol. 187, 225
- **BUSICO, V.** ; **CARBONNIERE, P.** ; **CIPULLO, R.** ; **PELLECCHIA, R.** ; **SEVERN, J.** ; **TALARICO, G.** *Macromol. Rapid Commun.*, 2007, vol. 28, 11289
- **RESCONI, L.** ; **CAVALLO, L.** ; **FAIT, A.** ; **PIEMONTESI, F.** *Chem. Rev.*, 2000, vol. 100, 1253
- **WANG, W-J.** ; **ZHU, S.** *Macromolecules*, 2000, vol. 33, 1157
- **CHENG, H. N.** *Macromolecules*, 1984, vol. 17, 1950
- **KLIMKE, K.** ; **PARKINSON, M.** ; **PIEL, C.** ; **KAMINSKY, W.** ; **SPIESS, H.W.** ; **WILHELM, M.** *Macromol. Chem. Phys.*, 2006, vol. 207, 382
- **PARKINSON, M.** ; **KLIMKE, K.** ; **SPIESS, H.W.** ; **WILHELM, M.** *Macromol. Chem. Phys.*, 2007, vol. 208, 2128
- **POLLARD, M.** ; **KLIMKE, K.** ; **GRAF, R.** ; **SPIESS, H.W.** ; **WILHELM, M.** ; **SPERBER, O.** ; **PIEL, C.** ; **KAMINSKY, W.** *Macromolecules*, 2004, vol. 37, 813
- **FILIP, X.** ; **TRIPON, C.** ; **FILIP, C.** *J. Mag. Resn.*, 2005, vol. 176, 239
- **GRIFFIN, J.M.** ; **TRIPON, C.** ; **SAMOSON, A.** ; **FILIP, C.** ; **BROWN, S.P.** *Mag. Res. in Chem*, 2007, vol. 45, S1, S198
- **CASTIGNOLLES, P.** ; **GRAF, R.** ; **PARKINSON, M.** ; **WILHELM, M.** ; **GABORIEAU, M.** *Polymer*, 2009, vol. 50, 2373
- *CHEMICAL ABSTRACTS*, 1709-70-2
- *CHEMICAL ABSTRACTS*, 6683-19-8
- *CHEMICAL ABSTRACTS*, 31570-04-4
- *CHEMICAL ABSTRACTS*, 1592-23-0